(19) **Europäisches Patentamt / European Patent Office / Office européen des brevets**

(11) **EP 4 601 379 A1**

(12) **EUROPEAN PATENT APPLICATION**

(43) Date of publication:
**13.08.2025  Bulletin 2025/33**

(21) Application number: **25156341.7**

(22) Date of filing: **06.02.2025**

(51) International Patent Classification (IPC):
*H04W 72/0453* (2023.01)    *H04L 5/00* (2006.01)
*H04W 16/14* (2009.01)    *H04W 72/541* (2023.01)
*H04W 84/12* (2009.01)

(52) Cooperative Patent Classification (CPC):
**H04W 72/0453; H04L 5/001; H04W 16/14;
H04W 72/541; H04W 84/12; H04W 74/0808**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.02.2024  CN 202410178175**

(71) Applicant: **Nokia Solutions and Networks Oy
02610 Espoo (FI)**

(72) Inventors:
- **GAO, Jun
  Shanghai, 201109 (CN)**
- **LUO, Ye
  Shanghai (CN)**

(74) Representative: **DREISS Patentanwälte PartG
mbB
Friedrichstraße 6
70174 Stuttgart (DE)**

(54) **COMMUNICATION DEVICE, METHOD, APPARATUS, AND COMPUTER READABLE STORAGE MEDIUM**

(57)    Example embodiments of the present disclosure relate to a communication device, method, apparatus, and computer-readable storage medium. The method for communication includes: in accordance with a determination that an interference for a first channel part exists, determining by a communication device, that a first resource part within the first channel part is unused; selecting a second resource part from a second channel part different from the first channel part; determining a bandwidth part formed by aggregating the second resource part and remaining resource part of the first channel part other than the first resource part as a current available bandwidth for communicating with a further communication device; and sending, to the further communication device, configuration information associated with the current available bandwidth.

## Description

### FIELD

Example embodiments of the present disclosure relate to the field of communications technologies, and more particularly, to a network device, method, apparatus, and computer-readable storage medium.

### BACKGROUND

Orthogonal frequency division multiple access (OFDMA) is a new technology introduced by the sixth generation of Wi-Fi technology (Wi-Fi 6), which may effectively improve spectrum utilization and improve performance of a wireless local area network (WLAN).

OFDMA in Wi-Fi 6 is similar to cellular mobile communication, and the channel bandwidth of Wi-Fi may be divided into different resource units (RUs) for different users to access.

### SUMMARY

In a first aspect of the present disclosure, a communication device is provided. The communication device includes: at least one processor; and at least one memory coupled to the at least one processor, the at least one memory having instructions stored therein, the at least one memory and the instructions being further configured to cause, with the at least one processor, the communication device to perform: in accordance with a determination that an interference for a first channel part exists, determining that a first resource part within the first channel part is unused; selecting a second resource part from a second channel part different from the first channel part; determining a bandwidth part formed by aggregating the second resource part and remaining resource part of the first channel part other than the first resource part as a current available bandwidth for communicating with a further communication device; and sending, to the further communication device, configuration information associated with the current available bandwidth.

In a second aspect of the present disclosure, a communication device is provided. The communication device includes: at least one processor; and at least one memory coupled to the at least one processor, the at least one memory having instructions stored therein, the at least one memory and the instructions being further configured to cause, with the at least one processor, the communication device to perform: receiving, from a further communication device, configuration information associated with a current available bandwidth of the further communication device, wherein the configuration information indicates at least a second resource part of a second channel part, and the current available bandwidth is formed by aggregating the second resource part and a remaining resource part of a first channel part other than the first resource part with each other; and communicating, based on the configuration information, with the further communication device by using the current available bandwidth.

In a third aspect of the present disclosure, a method for communication is provided. The method includes: in accordance with a determination that an interference for a first channel part exists, determining by a communication device, that a first resource part within the first channel part is unused; selecting a second resource part from a second channel part different from the first channel part; determining a bandwidth part formed by aggregating the second resource part and remaining resource part of the first channel part other than the first resource part as a current available bandwidth for communicating with a further communication device; and sending, to the further communication device, configuration information associated with the current available bandwidth.

In a fourth aspect of the present disclosure, a method for communication is provided. The method includes: receiving, from a further communication device, configuration information associated with a current available bandwidth of the further communication device, wherein the configuration information indicates at least a second resource part of a second channel part, and the current available bandwidth is formed by aggregating the second resource part and a remaining resource part of a first channel part other than the first resource part with each other; and communicating, based on the configuration information, with the further communication device by using the current available bandwidth.

In a fifth aspect of the present disclosure, an apparatus for communication is provided. The apparatus includes: means for, in accordance with a determination that an interference for a first channel part exists, determining that a first resource part within the first channel part is unused; means for selecting a second resource part from a second channel part different from the first channel part; means for determining a bandwidth part formed by aggregating the second resource part and remaining resource part of the first channel part other than the first resource part as a current available bandwidth for communicating with a further communication device; and means for sending, to the further communication device, configuration information associated with the current available bandwidth.

In a sixth aspect of the present disclosure, an apparatus for communication is provided. The apparatus includes: means for receiving, from a further communication device, configuration information associated with a current available bandwidth of the further communication device, wherein the configuration information indicates at least a second resource part of a second channel part, and the current available bandwidth is formed by aggregating the second resource part and a remaining resource part of a first channel part other than the first resource part with each other; and means for communicating, based on the configuration information, with the further communication device by using the current available bandwidth.

According to a seventh aspect of the present disclosure, a computer-readable storage medium having a computer program stored thereon is provided, the computer program including instructions that, when executed by a processor on a device, cause the device to perform the method of the third aspect or the fourth aspect.

It would be understood that content described in the summary section is not intended to limit key or important features of the embodiments of the present disclosure, nor is it intended to limit the scope of the present disclosure. Other features of the present disclosure would be readily understood from the following description.

**BRIEF DESCRIPTION OF DRAWINGS**

Example embodiments of the present disclosure are presented by way of example, and their advantages are explained in more detail below with reference to the accompanying drawings, in which

FIG. 1 illustrates a schematic diagram of an environment in which example embodiments described herein may be implemented;
FIG. 2 illustrates a schematic diagram of a communication process according to some example embodiments of the present disclosure;
FIG. 3 illustrates a schematic diagram of a resource aggregation process according to some example embodiments of the present disclosure;
FIG. 4 illustrates a circuit diagram of a communication device according to some example embodiments of the present disclosure;
FIG. 5 illustrates a flowchart of a communication method according to some example embodiments of the present disclosure;
FIG. 6 illustrates a flowchart of a communication method according to some example embodiments of the present disclosure;
FIG. 7 illustrates a simplified block diagram of a device suitable for implementing example embodiments of the present disclosure; and
FIG. 8 illustrates a schematic diagram of a computer-readable medium according to some example embodiments of the present disclosure.

Throughout the drawings, the same or similar reference numerals represent the same or similar elements.

**DETAILED DESCRIPTION**

The principles and spirit of the present disclosure would be described below with reference to several example embodiments shown in the accompanying drawings. It would be understood that these specific example embodiments are described only to enable those skilled in the art to better understand and implement the present disclosure, and do not limit the scope of the present disclosure in any way.

As used herein, the term "including" and similar terms would be understood to include "including but not limited to." The term "based on" would be understood to be "based at least in part on". The terms "one embodiment" or "the embodiment" would be understood as "at least one embodiment". The terms "first," "second," and the like may refer to different or identical objects. Other explicit and implicit definitions may also be included below.

As used herein, the term "determine" encompasses a wide variety of actions. For example, "determining" may include calculating, computing, processing, deriving, investigating, looking up (e.g., looking up in a table, database, or a further data structure), ascertaining, etc. Further, "determining" may include receiving (e.g., receiving information), accessing (e.g., accessing data in memory), etc. Further, "determining" may include parsing, selecting, picking, establishing, etc.

Herein, unless explicitly stated, "in response to A, performing a step" does not mean that the step is performed immediately after "A", but may include one or more intermediate steps.

The term "circuit device" as used herein refers to one or more of the following: (a) a hardware-only circuit implementation (such as an analog and/or digital-only circuit implementation); and (b) a combination of hardware circuitry and software, such as, if applicable: (i) a combination of analog and/or digital hardware circuitry and software/firmware, and (ii) any part of a hardware processor and software (including a digital signal processor, software, and memory that work together to enable an apparatus, such as an optical communication apparatus or other computing device, to perform various functions); and (c) hardware circuitry and/or a processor, such as a microprocessor or part of a microprocessor, which requires software (e.g., firmware) for operation, but may be free of software when software is not required for operation.

The definition of circuit apparatus applies to all scenarios in which the term is used in this application, including in any claim. As a further example, the term "circuit apparatus" as used herein also covers hardware circuitry or processors (or multiple processors) only, or portions of hardware circuitry or processors, or implementations thereof with accompanying software or firmware. For example, the term "circuit apparatus" also covers baseband integrated circuits or processor integrated circuits or similar integrated circuits in OLTs or other computing devices, if applicable to a particular claim element.

As used herein, the term "communication network" refers to a network that conforms to any suitable communication standard, such as New Radio (NR), Long Term Evolution (LTE), LTE-Advanced (LTE-A), Wideband Code Division Multiple Access (WCDMA), High Speed Packet Access (HSPA), Narrowband Internet of Things (NB-IoT), and the like. Further, communication between the terminal device and the network device in the communication network may be performed according to any suitable generation of communication protocols including, but not limited to, first generation (1G), second generation (2G), 2.5G, 2.75G, third generation (3G), fourth generation (4G), 4.5G, fifth generation (5G), sixth generation (6G) communication protocols, and/or any other protocol currently known or to be developed in the future. Example embodiments of the present disclosure may be applied to various communication systems, including but not limited to ground communication systems, non-ground communication systems, or a combination thereof. Given the rapid development in the communication field, certainly, future types of communication technologies and systems may also be used to implement the present disclosure. It would not be considered as limiting the scope of the present disclosure to only the foregoing systems.

As used herein, the term "network device" refers to a node in a communication network via which a terminal device accesses the network and receives services therefrom. Depending on the terminology and technology applied, a network device may refer to a base station (BS) or an access point (AP), such as a Node B (NodeB or NB), an evolved NodeB (eNodeB or eNB), an NR NB (also referred to as a gNB), a remote radio unit (RRU), a radio head (RH), a remote radio head (RRH), a relay, an integrated access and backhaul (IAB) node, a low power node such as femto, pico, etc.

As used herein, the term "terminal device" refers to any terminal device capable of wireless communication. By way of example, and not limitation, a terminal device may also be referred to as a network device, a user equipment (UE), a subscriber station (SS), a portable subscriber station, a mobile station (MS), or an access terminal (AT). The terminal device may include, but are not limited to, mobile phones, cellular phones, smart phones, voice over IP (VoIP) phones, wireless local loop phones, tablet computers, wearable terminal devices, personal digital assistants (PDAs), portable computers, desktop computers, image capture terminal devices such as, for example, digital cameras, gaming terminal devices, music storage and playback devices, vehicle-mounted wireless terminal devices, wireless endpoints, mobile stations, laptop embedded devices (LEEs), laptop mounted devices (LMEs), universal serial bus (USB) dongles, smart devices, wireless customer premises equipment (CPE), Internet of Things (IoT) devices, watches or other wearable devices, head-mounted displays (HMDs), vehicles, drones, medical devices and applications (e.g., telesurgery), industrial devices and applications (e.g., robots and/or other wireless devices operating in industrial and/or automated processing chain environments), consumer electronic devices, devices running on commercial and/or industrial wireless networks, and the like. A terminal device may correspond to a mobile terminal (MT) part (e.g., a relay node) of an IAB node. In the following description, the terms "terminal device", "network device", "terminal", "user equipment", and "UE" may be used interchangeably.

As used herein, the term "circuit" refers to one or more of the following:

(a) hardware-only circuit implementations (such as implementations of only analog and/or digital circuits); and
(b) a combination of hardware circuitry and software, such as if applicable:

(i) a combination of analog and/or digital hardware circuitry and software/firmware, and
(ii) any part of the hardware processor is in software (including a digital signal processor, software, and memory that work together to cause an apparatus such as an OLT or other computing device to perform various functions); and

(c) a hardware circuit and/or processor, such as a microprocessor or part of a microprocessor, requiring software (e.g., firmware) for operation, but may not have software when it is not needed for operation.

The definition of circuitry applies to all usage scenarios where this term is in this application, including in any claims. As a further example, the term "circuit" as used herein also covers implementations of only hardware circuits or processors (or processors), or parts of hardware circuits or processors, or accompanying software or firmware thereof. For example, if applicable to a particular claim element, the term "circuit" also covers a baseband integrated circuit or a processor integrated circuit or similar integrated circuit in an OLT or other computing device.

As already mentioned above, orthogonal frequency division multiple access (OFDMA) is a new technology introduced by the sixth generation of Wi-Fi technology (Wi-Fi 6). By introducing this technology, spectrum utilization may be effectively improved, thereby improving performance of a wireless local area network (WLAN). Therefore, the channel bandwidth of Wi-Fi may be divided into different resource units (RUs) for different users to access.

There are many limitations on the spectrum allocation of the spectrum (6GHz) involved in Wi-Fi, such as limitations on the available wireless spectrum range determined by the wireless license specifications of different countries.

For Wi-Fi devices operating in unlicensed bands (e.g., 2.4/5.8/6 GHz), external in-band interference may be faced, especially from other Wi-Fi access points.

Once a communication device (e.g., a Wi-Fi device) discovers that there is interference within the channel, the communication device may, for example, select other adjacent channels for communication to avoid the interference. Such a process may be referred to as dynamic channel selection (DCS). However, due to the spectral limitations described above, it cannot be ensured that DCS is successfully executed.

It is also possible that the communication device may forgo using a part of the resources in the channel that are interfered with to ensure that the channel may also be used for communication. However, this solution may reduce channel bandwidth that is originally available, so that throughput of communication is reduced, and transmission efficiency is degraded.

Therefore, embodiments of the present disclosure provide a dynamic flexible channel bandwidth (DFCBW) scheme. In this scheme, if the communication device determines an interference for a first channel part exists, it is determined that the first resource part within the first channel part is not used. The communication device selects a second resource part from a second channel part different from the first channel part and determines a bandwidth part formed by aggregating the second resource part and remaining resource part of the first channel part other than the first resource part as a current available bandwidth for communicating with a further communication device. The communication device sends, to the further communication device, configuration information associated with the current available bandwidth .

In this way, it may be ensured that the current channel may still be used for communication without changing the available bandwidth of the current channel when the current channel receives interference, thereby ensuring transmission reliability and predetermined transmission efficiency.

The principles and example embodiments of the present disclosure would be described in detail below with further reference to the accompanying drawings.

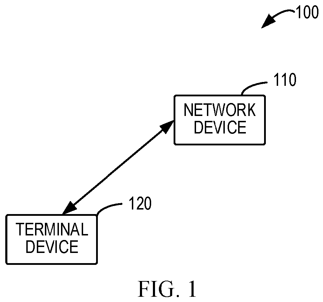

FIG. 1 illustrates a schematic diagram of an example communication network 100 in which example embodiments described herein may be implemented. The communication network 100 may be part of a communication network. The communications network 100 includes a network device 110 and a terminal device 120. The terminal device 120 may communicate with the network device 110.

In some example embodiments, network device 110 may include, for example, a wireless router configured to provide wireless network coverage to an indoor environment in which a user is located. The wireless router may be a network device conforming to the 802.11 family of standards or implemented by any suitable device, such as a Wi-Fi access point (AP), and the scope of the present disclosure is not limited in this respect. For example, the network device 110 may communicate with a further network device (for example, a base station) to provide wireless network coverage for terminal devices within a specific range, and the scope of the present disclosure is not limited in this aspect.

In some example embodiments, a link from the network device 110 to the terminal device 120 may be referred to as a downlink (DL) and a link from the terminal device 120 to the network device 110 may be referred to as an uplink (UL). In the DL, the network device 110 is a transmitting (TX) device (or transmitter) and the terminal device 120 is a receiving (RX) device (or receiver). In UL, the terminal device 120 is a TX device (or transmitter) and the network device 110 is an RX device (or receiver).

It would be understood that the devices and the number of their connections shown in FIG. 1 is merely illustrative and not limiting. The communication network 100 may include any suitable number of devices configured to implement example embodiments of the present disclosure. Although not shown, it would be understood that one or more further devices may be deployed in the communication network 100.

Communications in the communication network 100 may be implemented according to any suitable communication protocol(s). Examples of communication protocols include, but are not limited to, first generation (1G), second generation (2G), 2.5G, 2.75G, third generation (3G), fourth generation (4G), 4.5G, fifth generation (5G), sixth generation (6G), etc. cellular communication protocols, wireless local area network communication protocols such as Institute of Electrical and Electronics Engineers (IEEE) 802.1, etc., and/or any other protocol currently known or to be developed in the future.

Further, communications may utilize any suitable wireless communication technology, including but not limited to code division multiple access (CDMA), frequency division multiple access (FDMA), time division multiple access (TDMA), frequency division duplex (FDD), time division duplex (TDD), multiple-input multiple-output (MIMO), orthogonal frequency division multiplexing (OFDM), discrete Fourier transform-based spread orthogonal frequency division multiplexing (DFT-s-OFDM), and/or any other technology currently known or to be developed in the future.

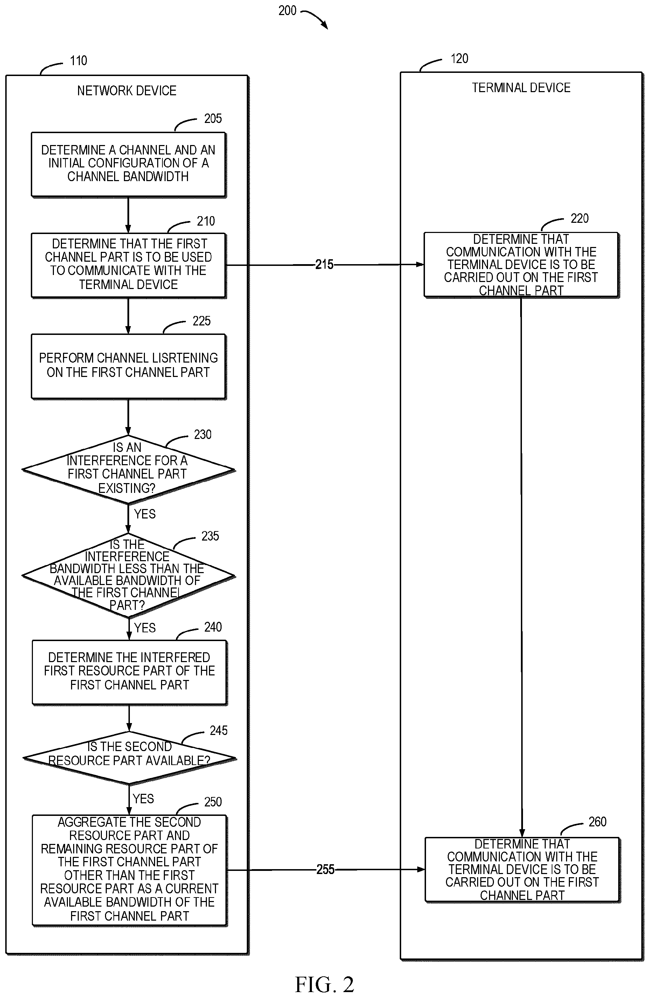

FIG. 2 illustrates a schematic diagram of a communication process 200 according to some example embodiments of the present disclosure. The communication process shown in FIG. 2 may involve, for example, the network device 110 (e.g., a Wi-Fi access point) and the terminal device 120 (e.g., a user equipment (UE)).

It would be understood that although not shown, in the communication process 200, at least some of the actions performed at the network device 110 may also be performed at the terminal device 120.

As shown in FIG. 2, at block 205, the network device 110 may determine a channel configuration to be used for communication and a corresponding channel bandwidth configuration. For example, the channel configuration may include an identification of a channel selected by network device 110 for initial communication. In the present disclosure, an initial channel selected by the network device 110 for communication is also referred to as an initial wanted channel (IWC), and a channel bandwidth corresponding to the initial channel is referred to as a channel bandwidth of the initial wanted channel (CBWIWC).

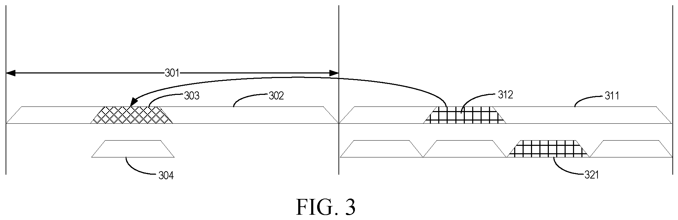

For example, as shown in FIG. 3, the network device 110 may determine a first channel part 302 as the IWC, and determine that the initial available bandwidth 301 corresponding to the first channel part 302 is CBWIWC .

As shown in FIG. 2, at block 210, if the network device 110 selects the first channel part 302 as the IWC for communicating with the terminal device 120 and determines that the initial available bandwidth 301 corresponding to the first channel part 302 is CBWIWC , the network device 110 may send (215) configuration channel information associated with the configuration to the terminal device 120. Therefore, at block 220, the terminal device 120 may also determine that the network device 110 selects the first channel part 302 as the IWC for communicating with the terminal device 120 and determine that the initial available bandwidth 301 corresponding to the first channel part 302 is CBWIWC .

At block 225, the network device 110 may perform channel listening on the selected first channel part prior to communicating, such as by performing a listen-before-talk (LBT) operation. For example, the network device 110 may perform a plurality of LBT operations at predetermined bandwidth intervals within all possible channel bandwidths supported by the network device 110. For example, the network device 110 may perform a plurality of LBT operations on the initial available bandwidth 301 of the first channel part 302 and the bandwidths of other listenable channels at predetermined bandwidth intervals to determine whether there is an in-channel interference (ICI) for the first channel part 302.

At block 230, if it is determined that there is an ICI for the first channel part 302, then at block 235, the network device 110 determines whether the bandwidth CBWICI of the ICI for the first channel part 302 is less than the CBWIWC of the first channel part 302.

If it is determined that CBWICI is less than CBWIWC , at block 240, the network device 110 may determine a first resource part corresponding to the CBWICI within the first channel part 302. That is, an ICI exists for the first resource part. The network device 110 in turn determines that the first resource part is unused. The first resource part may be considered as an unused resource unit (unused RU) within the first channel part 302.

As shown in FIG. 3, if the network device 110 determines that ICI 304 exists for the first channel part 302, a first resource part 303 corresponding to CBWICI of the ICI 304 is determined within the first channel part 302. The first resource part 303 would be excluded from the available bandwidth of the first channel part 302.

With continued reference to FIG. 2, at block 245, the network device 110 determines a second resource part from the second channel part, the second resource part having a resource size corresponding to the first resource part. The second channel part is different from the first channel part. For example, the second channel part may be selected from channels adjacent to the first channel part 302.

In some embodiments, the network device 110 may determine at least one adjacent channel in the same frequency domain range as the first channel part 302, and determine a corresponding busy degree of the at least one adjacent channel based on a result of performing an LBT operation on the at least one adjacent channel. If the network device 110 may determine that a first busy degree of a first adjacent channel in the at least one adjacent channel is lower than a threshold busy degree, the network device 110 may determine the first adjacent channel as the second channel part. It would be understood that the second channel part includes at least an idle resource part corresponding to the resource size of the first resource part. The network device 110 may determine an idle resource part of the second channel part that corresponds to the resource size of the first resource part as the second resource part.

For example, as shown in FIG. 3, if the network device 110 determines that the busy degree of an adjacent channel 311 of the first channel part 302 is lower than the threshold busy degree, and the adjacent channel 311 includes at least an idle resource part 312 corresponding to the resource size of the first resource part, the idle resource part 312 may be determined by the network device 110 as the second resource part.

In some further embodiments, if the adjacent channel 311 of the first channel part 302 is unavailable, for example, a business degree of the adjacent channel 311 is higher than the threshold busyness degree, or the adjacent channel 311 cannot be used due to a corresponding radio permission specification, the network device 110 may also select the second channel part from candidate channels that are in a different frequency domain range from the first channel part.

For example, as shown in FIG. 3, if the network device 110 determines that the adjacent channel 311 is unavailable, the network device 110 may determine, by performing an LBT operation, whether a candidate channel that is in a different frequency domain range from the first channel part, for example, the channel part 321, is idle. If the network device 110 determines that the channel part 321 is idle and the channel part 321 includes at least an idle resource part corresponding to the resource size of the first resource part, the channel part 321 is determined as the second channel part and idle resources within the second channel part are determined as the second resource part.

After determining the second resource part, at block 250, the network device 110 determines a bandwidth part formed by aggregating the second resource part and remaining resource part of the first channel part 302 other than the first resource part 303 as a current available bandwidth for the current available bandwidth of the first channel part 302.

For example, if the idle resource part 312 of the adjacent channel 311 in FIG. 3 is determined as the second resource part, the idle resource part 312 is aggregated with a resource part other than the first resource part 303 in the first channel part 302 to form the current available bandwidth of the first channel part 302. The resource part of the first channel part 302 other than the first resource part 303 may be regarded as an In-initial-channel part (IICP), and the idle resource part 312 of the adjacent channel 311 may be regarded as an Out-of-initial-channel Part (OOICP).

After determining the current available bandwidth that may be used to communicate with a further communication device, the network device 110 may send (255) configuration information of the current available bandwidth to the terminal device 120, such that at block 260, the terminal device 110 determines the current available bandwidth to be used for communication between the network device 110 and the terminal device 120.

In addition, if at block 235, the network device 110 determines that the CBWICI is greater than the CBWIWC , the network device 110 determines that the switching of channels can be implemented via the DCS to enable subsequent communication. If it is determined that it is not possible to perform the DCS, it is understood that the communication process is malfunctioning, and this is not specifically described in embodiments of the present disclosure.

If at block 245, the network device 110 may not find a suitable second resource part, it may be understood that the network device 110 would take to terminate using the first resource part and perform a subsequent communication process with a reduced available bandwidth, which is not specifically described in the embodiments of the present disclosure.

It would be understood that if at least a part of the foregoing actions performed at the network device 110 is performed by the terminal device 120, the network device 110 may provide a result of plurality of listened LBT operations to the terminal device 120, so that the terminal device 120 may determine interference and/or select a further available resource. In some cases, depending on the capability of the terminal device 120, the terminal device 120 may also independently perform an LBT operation.

Further, if the network device 110 later determines that the ICI for the first channel part is eliminated, use of the first resource part may be resumed and the second resource part terminated.

Through the scheme described by the embodiment of the disclosure, the influence of the interference in the channel on the transmission reliability and the transmission quality may be avoided, and the original available bandwidth may be not reduced, so that the data throughput and the transmission efficiency of communication are ensured at the same time.

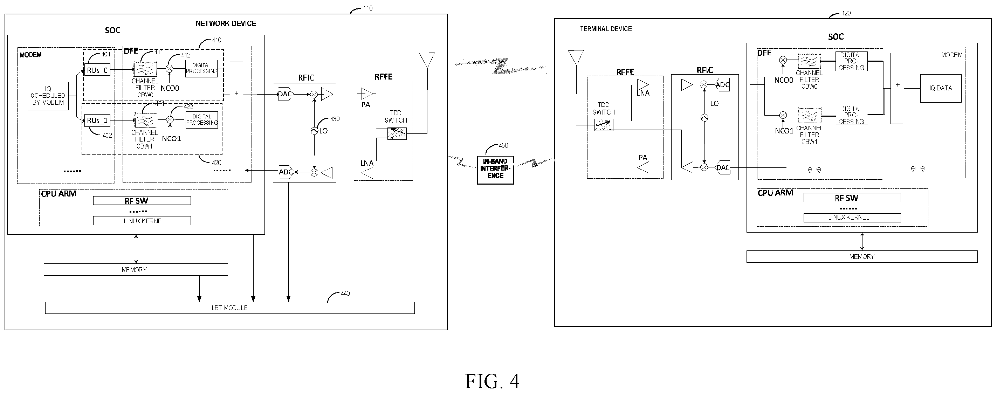

FIG. 4 illustrates a circuit diagram of a communication device according to some example embodiments of the present disclosure. It would be understood that the network device 110 and/or the terminal device 120 may include more or fewer circuit components. Circuit structures of the network device 110 and the terminal device 120 shown in FIG. 4 are merely for illustrative purposes, and solutions of the present disclosure are not limited in this aspect.

With reference to FIG. 4, at the network device 110, aggregation of resources in different channel parts described in the foregoing embodiments of the present disclosure is mainly implemented by using a circuit part 410 and a circuit part 420.

Assume that network device 110 is configured with an initial channel $CHa,$ there is:

$$f_{LO} = f_{c\_CHa} \quad (1)$$

$$NCO_0 = 0 \quad (2)$$

$$CBW_0 = CBW_{CHa} \quad (3)$$

wherein $f_{LO}$ is a frequency of a local oscillator (LO) 423 of the network device 110, $f_{c\_CHa}$ is a frequency of the initial channel $CHa, NCO_0$ is a count of a numerically controlled oscillator 412, $CBW_0$ is a bandwidth of a channel filter 411, and $CBW_{CHa}$ is a bandwidth of the initial channel $CHa.$

In the absence of interference, the circuit part 420 may be considered inactive.

Channel listening for the initial channel $CHa$ may be performed using an LBT module 440. If in-band interference 450 (represented as $CHb$) is detected, a resource unit RU corresponding to $CHb$ within the IICP of the initial channel $CHa$ is unavailable. The network device 110 in turn determines the further available channel part $CHc,$ which is also regarded as an OOICP.

OOICP may be configured by:

$$NCO_1 = f_{c\_CHc} - f_{c\_CHa} \quad (4)$$

$$CBW_1 = CBW_{CHc} \quad (5)$$

wherein $NCO_1$ is a count of a numerically controlled oscillator 422, $f_{c\_CHc}$ is a frequency of a further available channel part $CHc, CBW_1$ is a bandwidth of a channel filter 421, and $CBW_{CHc}$ is a bandwidth of the further available channel part $CHc.$

In this case, $CBW_1$ for a bandwidth for channel filter 421 and $CBW_0$ for a bandwidth for channel filter 411 may be aggregated to be used as the currently available bandwidth of the network device 110.

Once the LBT module 440 detects that the in-band interference 450 is eliminated, the circuit part 420 may re-become inactive.

It would be understood that operations at the terminal device 120 are similar to those at the network device 110, and details are not described again.

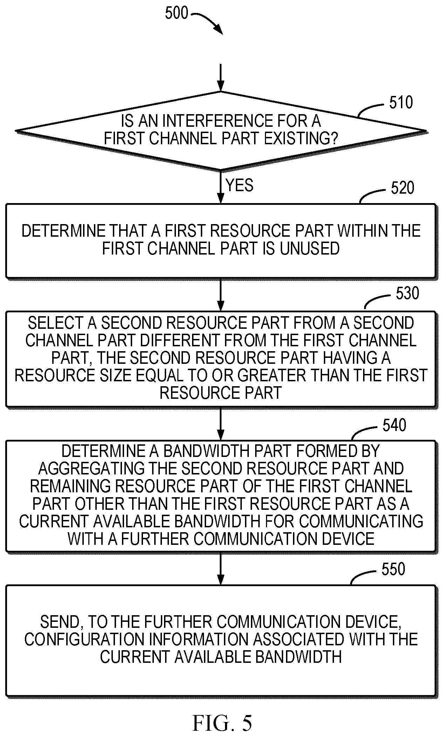

FIG. 5 illustrates a flowchart of a communication method according to some example embodiments of the present disclosure. A method 500 may be implemented at a communication device, for example, at the network device 110 and/or the terminal device 120.

At block 510, the communications device, in accordance with a determination that an interference for a first channel part exists, determines that a first resource part within the first channel part is unused at block 520.

At block 530, the communication device selects a second resource part from a second channel part different from the first channel part.

At block 540, the communication device determines a bandwidth part formed by aggregating the second resource part and remaining resource part of the first channel part other than the first resource part as a current available bandwidth for communicating with a further communication device.

At block 550, the communication device sends, to the further communication device, configuration information associated with the current available bandwidth.

In some example embodiments, the method 500 further includes: determining at least one adjacent channel located in a same frequency domain range as the first channel part; determining respective busy degrees of the at least one adjacent channel based on a result of performing a listen-before-talk, LBT, operation on the at least one adjacent channel; and in accordance with a determination that a first busy degree of a first adjacent channel in the at least one adjacent channel is lower than a threshold busy degree, determining the first adjacent channel as the second channel part.

In some example embodiments, wherein the second resource part has a resource size equal to or greater than the first resource part.

In some example embodiments, the method 500 further includes: in accordance with a determination that respective busy degrees of the at least one adjacent channel are all higher than a threshold busy degree, selecting the second channel part from at least one candidate channel that is located in a different frequency domain range from the first channel part.

In some example embodiments, the method 500 further includes: in accordance with a determination that an interference for the first resource part is eliminated, resuming using the first resource part within the first channel part; and terminating using the second resource part as an available bandwidth of the first channel part.

In some example embodiments, the first channel part has an initial available bandwidth, and wherein the current available bandwidth aggregated from the second resource part and the remaining resource part corresponds to the initial available bandwidth.

In some example embodiments, determining that the first resource part within the first channel part is unused further includes: determining whether bandwidth of the interference exceeds an initial available bandwidth corresponding to the first channel part; and in accordance with a determination that the bandwidth of the interference fails to exceed the initial available bandwidth corresponding to the first channel part, determining the first resource part within the first channel part corresponding to the bandwidth of the interference.

In some example embodiments, the communication device includes a network device for Wi-Fi communication and the further communication device includes a terminal device, or the communication device includes a terminal device and the further communication device includes a network device for Wi-Fi communication.

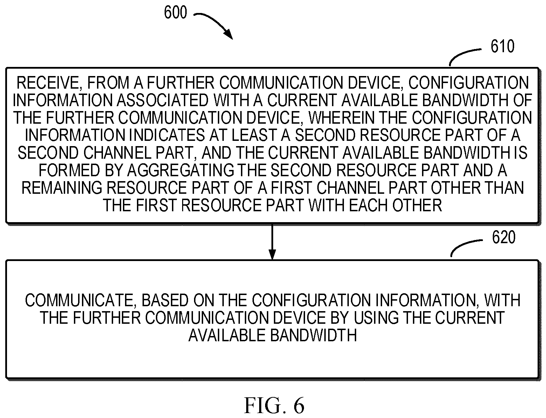

FIG. 6 illustrates a flowchart of a communication method according to some example embodiments of the present disclosure. A method 600 may be implemented at a communication device, for example, at the network device 110 and/or the terminal device 120.

At block 610, the communication device receives, from a further communication device, configuration information associated with a current available bandwidth of the further communication device, wherein the configuration information indicates at least a second resource part of a second channel part, and the current available bandwidth is formed by aggregating the second resource part and a remaining resource part of a first channel part other than the first resource part with each other.

At block 620, the communication device communicates , based on the configuration information, with the further communication device by using the current available bandwidth.

In some example embodiments, the communication device comprises a network device for Wi-Fi communication and the further communication device comprises a terminal device, or the communication device comprises a terminal device and the further communication device comprises a network device for Wi-Fi communication.

In some example embodiments, an apparatus for communication may include means for performing corresponding steps of the method 500. These components may be implemented in any suitable manner. For example, the components may be implemented as circuitry or software modules.

The apparatus for communication may include: means for, in accordance with a determination that an interference for a first channel part exists, determining that a first resource part within the first channel part is unused; means for selecting a second resource part from a second channel part different from the first channel part; means for determining a bandwidth part formed by aggregating the second resource part and remaining resource part of the first channel part other than the first resource part as a current available bandwidth for communicating with a further communication device; and means for sending, to the further communication device, configuration information associated with the current available bandwidth.

In some example embodiments, the apparatus for communicating further includes: means for determining at least one adjacent channel located in a same frequency domain range as the first channel part; means for determining respective busy degrees of the at least one adjacent channel based on a result of performing a listen-before-talk, LBT, operation on the at least one adjacent channel; and means for, in accordance with a determination that a first busy degree of a first adjacent channel in the at least one adjacent channel is lower than a threshold busy degree, determining the first adjacent channel as the second channel part.

In some example embodiments, wherein the second resource part has a resource size equal to or greater than the first resource part.

In some example embodiments, the apparatus for communicating further includes means for, in accordance with a determination that respective busy degrees of the at least one adjacent channel are all higher than a threshold busy degree, selecting the second channel part from at least one candidate channel that is located in a different frequency domain range from the first channel part.

In some example embodiments, the apparatus for communicating further includes: means for, in accordance with a determination that an interference for the first resource part is eliminated, resuming using the first resource part within the first channel part, and means for terminating using the second resource part as an available bandwidth of the first channel part.

In some example embodiments, the first channel part has an initial available bandwidth, and wherein the current available bandwidth aggregated from the second resource part and the remaining resource part corresponds to the initial available bandwidth.

In some example embodiments, the means for determining that the first resource part within the first channel part is unused further includes: means for determining whether bandwidth of the interference exceeds an initial available bandwidth corresponding to the first channel part; and means for, in accordance with a determination that the bandwidth of the interference fails to exceed the initial available bandwidth corresponding to the first channel part, determining the first resource part within the first channel part corresponding to the bandwidth of the interference.

In some example embodiments, the communication device comprises a network device for Wi-Fi communication and the further communication device comprises a terminal device, or the communication device comprises a terminal device and the further communication device comprises a network device for Wi-Fi communication.

In some example embodiments, an apparatus for communication may include means for performing corresponding steps of the method 600. These components may be implemented in any suitable manner. For example, the components may be implemented as circuitry or software modules.

The apparatus for communication may include: means for receiving, from a further communication device, configuration information associated with a current available bandwidth of the further communication device, wherein the configuration information indicates at least a second resource part of a second channel part, and the current available bandwidth is formed by aggregating the second resource part and a remaining resource part of a first channel part other than the first resource part with each other; and means for communicating, based on the configuration information, with the further communication device by using the current available bandwidth.

In some example embodiments, the communication device comprises a network device for Wi-Fi communication and the further communication device comprises a terminal device, or the communication device comprises a terminal device and the further communication device comprises a network device for Wi-Fi communication.

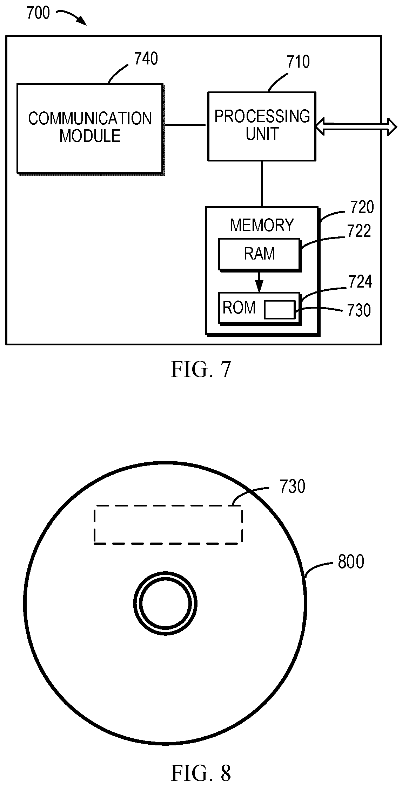

FIG. 7 is a simplified block diagram of a device 700 suitable for implementing example embodiments of the present disclosure. The device 700 may be configured to implement the network device 110 and/or the terminal device 120 in the communications network 100. As shown, the device 700 includes one or more processing units 710, one or more memories 720 coupled to the processing units 710, and a communication module 740 coupled to the processing units 710.

The communication module 740 is configured for two-way communication. In some example embodiments, the communication module 740 may have at least one antenna to facilitate communication. In some example embodiments, the communication module 740 may be one or more communication interfaces. The communication interface may represent any interface needed to communicate with other network elements.

The processing unit 710 may be of any type suitable for a local technology network and may include, but is not limited to, one or more of a general purpose computer, a special purpose computer, a microcontroller, a digital signal controller (DSP), and a controller-based multi-core controller architecture. The device 700 may have a plurality of processors, such as an application specific integrated circuit chip, that is temporally slaved to a clock synchronized with the master processor.

The memory 720 may include one or more non-volatile memories and one or more volatile memories.

Examples of non-volatile memory include, but are not limited to, a read-only memory (ROM) 724, erasable programmable read-only memory (EPROM), flash memory, hard disk, compact disk (CD), digital video disk (DVD), and other magnetic and/or optical storage. Examples of volatile memory include, but are not limited to, a random access memory (RAM) 722 and other volatile memory that does not last for a power down duration.

Computer program 730 includes computer-executable instructions for execution by associated the processing unit 710. The computer program 730 may be stored in ROM 724. The processing unit 710 may perform any suitable actions and processing by loading the computer program 730 into the RAM 722.

Example embodiments of the present disclosure may be implemented by means of the computer program 730, so that the device 700 may perform any process of the present disclosure as discussed with reference to FIGS. 2 to 6. Example embodiments of the present disclosure may also be implemented by hardware or by a combination of software and hardware.

In some example embodiments, the computer program 730 may be tangibly embodied in a computer-readable medium that may be included in the device 700, such as in the memory 720, or a further storage device accessible by the device 700. The computer program 730 may be loaded from a computer-readable medium to the RAM 722 for execution. Computer-readable media may include any type of tangible non-volatile memory, such as ROM, EPROM, flash memory, hard disk, CD, DVD, etc. FIG. 8 illustrates an example of a computer-readable medium 800 in the form of a CD or DVD according to some example embodiments of the present disclosure. The computer program 730 is stored on the computer-readable medium 800.

In general, various embodiments of the present disclosure may be implemented in hardware or dedicated circuitry, software, logic, or any combination thereof. Some aspects may be implemented in hardware, while other aspects may be implemented in firmware or software, which may be executed by a controller, microprocessor, or other computing device. While various aspects of example embodiments of the present disclosure are shown and described as block diagrams, flowcharts, or using some other pictorial representation, it would be understood that the blocks, apparatuses, systems, techniques, or methods described herein may be implemented as non-limiting examples, hardware, software, firmware, dedicated circuitry or logic, general purpose hardware or controller or other computing device, or some combination thereof.

The present disclosure also provides at least one computer program product tangibly stored on a computer readable storage medium. In some example embodiments, the computer-readable storage medium may be non-transitory. The computer program product includes computer-executable instructions, such as instructions included in program modules, that execute in a device on a target real or virtual processor to perform the method 500 described above with reference to FIG. 5 or the method 600 described in FIG. 6. Generally, program modules include routines, programs, libraries, objects, classes, components, data structures, etc. that perform particular tasks or implement particular abstract data types. In various embodiments, the functionality of program modules may be combined or divided between program modules as desired. Machine-executable instructions for program modules may be executed within local or distributed devices. In distributed devices, program modules may be located in local and remote storage media.

Computer program code for implementing the methods of the present disclosure may be written in one or more programming languages. These computer program codes may be provided to a processor of a general purpose computer, special purpose computer, or other programmable data processing apparatus such that the program codes, when executed by the computer or other programmable data processing apparatus, cause the functions/operations specified in the flowchart and/or block diagram to be implemented. Program code may execute entirely on a computer, partially on a computer, as a stand-alone software package, partially on a computer and partially on a remote computer, or entirely on a remote computer or server.

In the context of the present disclosure, computer program code or related data may be carried by any suitable carrier to enable a device, apparatus or processor to perform the various processes and operations described above. Examples of carriers include signals, computer-readable media, and the like. Examples of signals may include electrical, optical, radio, sound, or other forms of propagated signals, such as carrier waves, infrared signals, and the like.

The computer-readable medium may be any tangible medium containing or storing a program for or relating to an instruction execution system, apparatus, or device. The computer-readable media may be computer-readable signal media or computer-readable storage media. The computer-readable medium may include, but is not limited to, an electronic, magnetic, optical, electromagnetic, infrared, or semiconductor system, apparatus, or device, or any suitable combination thereof. More detailed examples of computer-readable storage media include an electrical connection with one or more wires, a portable computer diskette, a hard disk, a random access memory (RAM), a read-only memory (ROM), an erasable programmable read-only memory (EPROM or Flash memory), an optical storage device, a magnetic storage device, or any suitable combination thereof.

Furthermore, although the operations of the methods of the present disclosure are described in a particular order in the drawings, this does not require or imply that these operations must be performed in that particular order, or that all of the illustrated operations must be performed to implement a desired result. Rather, the steps depicted in the flowchart may change the order of execution. Alternatively or in addition, certain steps may be omitted, a plurality of steps combined into one step execution, and/or one step decomposed into a plurality of step execution. It should also be noted that features and functions of two or more devices according to the present disclosure may be embodied in one device. Conversely, the features and functions of one apparatus described above may be further divided into a plurality of apparatuses.

While the disclosure has been described with reference to several specific embodiments, it would be understood that the disclosure is not limited to the specific embodiments disclosed. The present disclosure is intended to cover various modifications and equivalent arrangements included within the spirit and scope of the appended claims.

**Claims**

1. A communications device (110; 120),comprising:

    at least one processor; and
    at least one memory coupled to the at least one processor, the at least one memory having instructions stored therein, the at least one memory and the instructions being further configured to cause, with the at least one processor, the communication device (110; 120) to perform:

        in accordance with a determination (510) that an interference for a first channel part exists, determining (520) that a first resource part within the first channel part is unused;
        selecting (530) a second resource part from a second channel part different from the first channel part;
        determining (540) a bandwidth part formed by aggregating the second resource part and remaining resource part of the first channel part other than the first resource part as a current available bandwidth for communicating with a further communication device; and
        sending (550), to the further communication device, configuration information associated with the current available bandwidth.

2. The communication device (110; 120) of claim 1, further comprising:

    determining at least one adjacent channel located in a same frequency domain range as the first channel part;
    determining respective busy degrees of the at least one adjacent channel based on a result of performing a listen-before-talk, LBT, operation on the at least one adjacent channel; and
in accordance with a determination that a first busy degree of a first adjacent channel in the at least one adjacent channel is lower than a threshold busy degree, determining the first adjacent channel as the second channel part.

3. The communication device (110; 120) of claim 1, wherein the second resource part has a resource size equal to or greater than the first resource part.

4. The communication device (110; 120) of claim 1, wherein a) the method further comprises:

    in accordance with a determination that respective busy degrees of the at least one adjacent channel are all higher than a threshold busy degree, selecting the second channel part from at least one candidate channel that is located in a different frequency domain range from the first channel part, and/or
    wherein b) the method further comprises:

        in accordance with a determination that an interference for the first resource part is eliminated, resuming using the first resource part within the first channel part; and terminating using the second resource part as an available bandwidth of the first channel part, and/or
        wherein c) the first channel part has an initial available bandwidth, and wherein the current available bandwidth aggregated from the second resource part and the remaining resource part corresponds to the initial available bandwidth, and/or
        wherein d) determining (520) that the first resource part within the first channel part is unused further comprises:

            determining whether bandwidth of the interference exceeds an initial available bandwidth corresponding to the first channel part; and
            in accordance with a determination that the bandwidth of the interference fails to exceed the initial available bandwidth corresponding to the first channel part,determining the first resource part within the first channel part corresponding to the bandwidth of the interference.

5. The communication device (110; 120) of any of claims 1 to 4, wherein

    the communication device comprises a network device for Wi-Fi communication and the further communication device comprises a terminal device, or

the communication device comprises a terminal device and the further communication device comprises a network device for Wi-Fi communication.

6. A communications device (110; 120), comprising:

at least one processor; and
at least one memory coupled to the at least one processor, the at least one memory having instructions stored therein, the at least one memory and the instructions being further configured to cause, with the at least one processor, the communication device (110; 120) to perform:

receiving (610), from a further communication device, configuration information associated with a current available bandwidth of the further communication device, wherein the configuration information indicates at least a second resource part of a second channel part, and the current available bandwidth is formed by aggregating the second resource part and a remaining resource part of a first channel part other than the first resource part with each other; and
communicating (620), based on the configuration information, with the further communication device by using the current available bandwidth,
wherein for example the communication device (110; 120) comprises a network device for Wi-Fi communication and the further communication device comprises a terminal device, or
the communication device (110; 120) comprises a terminal device and the further communication device comprises a network device for Wi-Fi communication.

7. A method for communication, comprising:

in accordance with a determination (510) that an interference for a first channel part exists, determining (520) by a communication device (110; 120), that a first resource part within the first channel part is unused;
selecting (530) a second resource part from a second channel part different from the first channel part;
determining (540) a bandwidth part formed by aggregating the second resource part and remaining resource part of the first channel part other than the first resource part as a current available bandwidth for communicating with a further communication device; and
sending (550), to the further communication device, configuration information associated with the current available bandwidth.

8. The method of claim 7, further comprising:

determining at least one adjacent channel located in a same frequency domain range as the first channel part;
determining respective busy degrees of the at least one adjacent channel based on a result of performing a listen-before-talk, LBT, operation on the at least one adjacent channel; and
in accordance with a determination that a first busy degree of a first adjacent channel in the at least one adjacent channel is lower than a threshold busy degree, determining the first adjacent channel as the second channel part.

9. The method of claim 7, wherein the second resource part has a resource size equal to or greater than the first resource part.

10. The method of claim 7, wherein a) the method further comprises:

in accordance with a determination that respective busy degrees of the at least one adjacent channel are all higher than a threshold busy degree, selecting the second channel part from at least one candidate channel that is located in a different frequency domain range from the first channel part, and/or
wherein b) the method further comprises:

in accordance with a determination that an interference for the first resource part is eliminated, resuming using the first resource part within the first channel part; and
terminating using the second resource part as an available bandwidth of the first channel part, and/or
wherein c) the first channel part has an initial available bandwidth, and wherein the current available bandwidth aggregated from the second resource part and the remaining resource part corresponds to the initial available bandwidth, and/or
wherein d) determining (520) that the first resource part within the first channel part is unused further comprises:

determining whether bandwidth of the interference exceeds an initial available bandwidth corresponding to the first channel part; and
in accordance with a determination that the bandwidth of the interference fails to exceed the initial available bandwidth corresponding to the first channel part, determining the first resource part within the first channel part corresponding to the bandwidth of the interference.

11. The method of any of claims 7 to 10, wherein

the communication device comprises a network device for Wi-Fi communication and the further communication device comprises a terminal device, or

the communication device comprises a terminal device and the further communication device comprises a network device for Wi-Fi communication.

12. A method for communication, comprising:

receiving (610), from a further communication device, configuration information associated with a current available bandwidth of the further communication device, wherein the configuration information indicates at least a second resource part of a second channel part, and the current available bandwidth is formed by aggregating the second resource part and a remaining resource part of a first channel part other than the first resource part with each other; and communicating (620), based on the configuration information, with the further communication device by using the current available bandwidth, wherein for example the communication device comprises a network device for Wi-Fi communication and the further communication device comprises a terminal device, or

the communication device comprises a terminal device and the further communication device comprises a network device for Wi-Fi communication.

13. An apparatus for communication, comprising:

means for, in accordance with a determination (510) that an interference for a first channel part exists, determining (520) that a first resource part within the first channel part is unused;

means for selecting (530) a second resource part from a second channel part different from the first channel part;

means for determining (540) a bandwidth part formed by aggregating the second resource part and remaining resource part of the first channel part other than the first resource part as a current available bandwidth for communicating with a further communication device; and

means for sending (550), to the further communication device, configuration information associated with the current available bandwidth.

14. An apparatus for communication, comprising:

means for receiving (610), from a further communication device, configuration information associated with a current available bandwidth of the further communication device, wherein the configuration information indicates at least a second resource part of a second channel part, and the current available bandwidth is formed by aggregating the second resource part and a remaining resource part of a first channel part other than the first resource part with each other; and

means for communicating (620), based on the configuration information, with the further communication device by using the current available bandwidth.

15. A computer-readable storage medium having a computer program stored thereon, the computer program comprising instructions that, when executed by a processor on a device, cause the device to perform the method of any of to claims 7 to 11 or claim 12.

100

110

NETWORK
DEVICE

120

TERMINAL
DEVICE

FIG. 1

200

## NETWORK DEVICE
110

**205**
DETERMINE A CHANNEL AND AN
INITIAL CONFIGURATION OF A
CHANNEL BANDWIDTH

**210**
DETERMINE THAT THE FIRST
CHANNEL PART IS TO BE USED
TO COMMUNICATE WITH THE
TERMINAL DEVICE

**225**
PERFORM CHANNEL LISRTENING
ON THE FIRST CHANNEL PART

**230**
IS AN
INTERFERENCE FOR A
FIRST CHANNEL PART
EXISTING?

YES

**235**
IS THE
INTERFERENCE
BANDWIDTH LESS THAN THE
AVAILABLE BANDWIDTH OF
THE FIRST CHANNEL
PART?

YES **240**
DETERMINE THE INTERFERED
FIRST RESOURCE PART OF THE
FIRST CHANNEL PART

**245**
IS THE SECOND
RESOURCE PART AVAILABLE?

YES **250**
AGGREGATE THE SECOND
RESOURCE PART AND
REMAINING RESOURCE PART OF
THE FIRST CHANNEL PART
OTHER THAN THE FIRST
RESOURCE PART AS A CURRENT
AVAILABLE BANDWIDTH OF THE
FIRST CHANNEL PART

## TERMINAL DEVICE
120

**220**
DETERMINE THAT
COMMUNICATION WITH THE
TERMINAL DEVICE IS TO BE
CARRIED OUT ON THE FIRST
CHANNEL PART

**260**
DETERMINE THAT
COMMUNICATION WITH THE
TERMINAL DEVICE IS TO BE
CARRIED OUT ON THE FIRST
CHANNEL PART

215

255

FIG. 2

FIG. 3

FIG. 4

500

↓

◇ IS AN INTERFERENCE FOR A FIRST CHANNEL PART EXISTING? ◇ — 510

↓ YES — 520

┌─────────────────────────────────────────────┐
│ DETERMINE THAT A FIRST RESOURCE PART WITHIN THE │
│ FIRST CHANNEL PART IS UNUSED │
└─────────────────────────────────────────────┘

↓ — 530

┌─────────────────────────────────────────────┐
│ SELECT A SECOND RESOURCE PART FROM A SECOND │
│ CHANNEL PART DIFFERENT FROM THE FIRST CHANNEL │
│ PART, THE SECOND RESOURCE PART HAVING A │
│ RESOURCE SIZE EQUAL TO OR GREATER THAN THE FIRST │
│ RESOURCE PART │
└─────────────────────────────────────────────┘

↓ — 540

┌─────────────────────────────────────────────┐
│ DETERMINE A BANDWIDTH PART FORMED BY │
│ AGGREGATING THE SECOND RESOURCE PART AND │
│ REMAINING RESOURCE PART OF THE FIRST CHANNEL │
│ PART OTHER THAN THE FIRST RESOURCE PART AS A │
│ CURRENT AVAILABLE BANDWIDTH FOR COMMUNICATING │
│ WITH A FURTHER COMMUNICATION DEVICE │
└─────────────────────────────────────────────┘

↓ — 550

┌─────────────────────────────────────────────┐
│ SEND, TO THE FURTHER COMMUNICATION DEVICE, │
│ CONFIGURATION INFORMATION ASSOCIATED WITH THE │
│ CURRENT AVAILABLE BANDWIDTH │
└─────────────────────────────────────────────┘

FIG. 5

600

610

RECEIVE, FROM A FURTHER COMMUNICATION DEVICE, CONFIGURATION INFORMATION ASSOCIATED WITH A CURRENT AVAILABLE BANDWIDTH OF THE FURTHER COMMUNICATION DEVICE, WHEREIN THE CONFIGURATION INFORMATION INDICATES AT LEAST A SECOND RESOURCE PART OF A SECOND CHANNEL PART, AND THE CURRENT AVAILABLE BANDWIDTH IS FORMED BY AGGREGATING THE SECOND RESOURCE PART AND A REMAINING RESOURCE PART OF A FIRST CHANNEL PART OTHER THAN THE FIRST RESOURCE PART WITH EACH OTHER

620

COMMUNICATE, BASED ON THE CONFIGURATION INFORMATION, WITH THE FURTHER COMMUNICATION DEVICE BY USING THE CURRENT AVAILABLE BANDWIDTH

FIG. 6

700

740    710

COMMUNICATION
MODULE

PROCESSING
UNIT

MEMORY    720
                722
RAM

ROM    724
           730

FIG. 7

730

800

FIG. 8

Europäisches
Patentamt

European
Patent Office

Office européen
des brevets

**EUROPEAN SEARCH REPORT**

Application Number

EP 25 15 6341

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/379114 A1 (YU JIAN [CN] ET AL) 23 November 2023 (2023-11-23) | 1,3,5-7, 9,11-15 | INV. H04W72/0453 |
| Y | * paragraph [0066] * <br> * paragraph [0129] - paragraph [0130] * <br> * paragraph [0141] - paragraph [0151] * <br> * paragraph [0169] - paragraph [0170] * <br> * figure 9a * <br> ----- | 2,4,8,10 | H04L5/00 <br> H04W16/14 <br> H04W72/541 <br> H04W84/12 |
| Y | EP 3 282 630 A1 (ERICSSON TELEFON AB L M [SE]) 14 February 2018 (2018-02-14) <br> * paragraph [0111] * <br> * paragraph [0184] * <br> ----- | 2,4,8,10 | |

**TECHNICAL FIELDS SEARCHED (IPC)**

H04W
H04L

The present search report has been drawn up for all claims

| Place of search | Date of completion of the search | Examiner |
|---|---|---|
| The Hague | 26 June 2025 | Schmidbauer, Philipp |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 15 6341

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2025

| Patent document cited in search report | Publication date | Patent family member(s) | Publication date |
|---|---|---|---|
| US 2023379114 A1 | 23-11-2023 | CN 114845395 A<br>US 2023379114 A1<br>WO 2022166240 A1 | 02-08-2022<br>23-11-2023<br>11-08-2022 |
| EP 3282630 A1 | 14-02-2018 | NONE | |

EPO FORM P0459

For more details about this annex : see Official Journal of the European Patent Office, No. 12/82